(19)

Europäisches
Patentamt

European
Patent Office

Office européen
des brevets

(11) **EP 2 639 462 A1**

(12) **EUROPÄISCHE PATENTANMELDUNG**

(43) Veröffentlichungstag:
**18.09.2013 Patentblatt 2013/38**

(51) Int Cl.:
**F15D 1/12** *(2006.01)*      **B60B 21/02** *(2006.01)*
**B60B 5/02** *(2006.01)*

(21) Anmeldenummer: **13159133.1**

(22) Anmeldetag: **14.03.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **15.03.2012 AT 500842012**

(71) Anmelder: **Leitl, Peter Adrian
8010 Graz (AT)**

(72) Erfinder: **Leitl, Peter Adrian
8010 Graz (AT)**

(74) Vertreter: **Wirnsberger, Gernot
Mühlgasse 3
8700 Leoben (AT)**

(54) **Rotationskörper mit reibungsreduzierender Oberfläche sowie Verfahren zur Herstellung desselben**

(57) Die Erfindung betrifft einen Rotationskörper (1), insbesondere eine Fahrradfelge, aufweisend einen im Wesentlichen runden Außenteil (2) mit mindestens einer Oberfläche, wobei der Rotationskörper (1) um eine Rotationsachse (3) drehbar lagerbar und bei einer Rotation um die Rotationsachse (3) zumindest teilweise von einer turbulenten Strömung eines Mediums überströmbar ist. Erfindungsgemäß ist vorgesehen, dass mindestens ein Teil einer Oberfläche des Außenteiles (2) Rippen (4) aufweist, die einen strömungsmechanischen Reibungswiderstand der Oberfläche reduzieren, wobei die Rippen (4) im Wesentlichen regelmäßig entlang einer Umfangsrichtung des Rotationskörpers (1) angeordnet sind.

Weiter betrifft die Erfindung ein Verfahren zum Herstellen eines derartigen Rotationskörpers (1).

Darüber hinaus betrifft die Erfindung eine Verwendung eines derartigen Rotationskörpers (1).

Fig. 1

EP 2 639 462 A1

**Beschreibung**

Die Erfindung betrifft einen Rotationskörper, insbesondere eine Fahrradfelge, aufweisend einen im Wesentlichen runden Außenteil mit mindestens einer Oberfläche, wobei der Rotationskörper um eine Rotationsachse drehbar lagerbar und bei einer Rotation um die Rotationsachse zumindest teilweise von einer turbulenten Strömung eines Mediums überströmbar ist.

Weiter betrifft die Erfindung ein Verfahren zum Herstellen eines derartigen Rotationskörpers.

Darüber hinaus betrifft die Erfindung eine Verwendung eines derartigen Rotationskörpers.

Gemäß dem Stand der Technik sind verschiedene Oberflächen zum Reduzieren einer Reibung einer turbulent überströmten Wand bekannt geworden. Beispielsweise offenbart die EP 0 205 289 A1 eine strukturierte Oberfläche zur Reduktion eines Wandreibungswiderstandes sowie verschiedene Ausbildungen von Strukturen, die diese Reduktion ermöglichen.

Auch in der DE 196 50 439 A1 wird eine Oberfläche einer Wand beschrieben, die von einer eine Strömungshauptrichtung aufweisenden Strömung turbulent umströmt wird und zur Reduktion eines Strömungswiderstandes mit Rippen in Richtung der Strömungshauptrichtung der Strömung versehen ist. Derartige Rippen, die oft auch als Riblets bezeichnet werden, haben sich als günstig erwiesen und werden bereits bei Hochgeschwindigkeitsanwendungen, beispielsweise auf Flugzeugtragflächen, zur Reibungsreduktion eingesetzt. Aufgrund einer Ausrichtung der Riblets in Strömungshauptrichtung werden in einer turbulenten Grenzschicht Querbewegungen von Wirbeln behindert, wodurch eine Wandreibung um bis zu 10 % vermindert werden kann. Bislang werden derartig strukturierte Oberflächen lediglich für Anwendungen verwendet, bei denen Oberflächen während einer ordnungsgemäßen Verwendung im Wesentlichen in einer Richtung, insbesondere einer Strömungshauptrichtung, überströmt werden. Für rotierende Bauteile, insbesondere Räder oder Felgen, bei denen sich eine Strömungsrichtung an einem Punkt der Oberfläche während der Rotation ändert und keine Strömungshauptrichtung feststellbar ist, sind keine derartigen reibungsreduzierenden Maßnahmen bekannt. Dies ist insbesondere deshalb von Nachteil, da an Rädern eines Fahrzeuges aufgrund einer hohen Geschwindigkeit, die beispielsweise an einem Radumfang doppelt so hoch wie die Geschwindigkeit des Fahrzeuges ist, üblicherweise hohe Reibungsverluste entstehen. Weiter ist eine Vielzahl von rotierenden Maschinen oder Bauteilen bekannt, beispielsweise Rotoren elektrischer Generatoren, an denen aufgrund hoher Rotationsgeschwindigkeiten beträchtliche Reibungs- und damit Energieverluste auftreten. Derartige Anwendungen werden von reibungsreduzierenden Oberflächen des Standes der Technik nicht abgedeckt.

Hier setzt die Erfindung an. Aufgabe der Erfindung ist es, einen Rotationskörper der eingangs genannten Art anzugeben, der eine Oberfläche aufweist, die geeignet ist, einen Reibungswiderstand bei einer aufgrund einer Rotation des Rotationskörpers auftretenden turbulenten Strömung zu reduzieren. Dies soll auf einfache und kostengünstige Weise erreicht werden. Darüber hinaus sollen Nachteile des Standes der Technik vermieden oder zumindest verringert werden.

Des Weiteren soll ein Verfahren angegeben werden, mit dem ein derartiger Rotationskörper hergestellt werden kann.

Darüber hinaus soll eine Verwendung eines solchen Rotationskörpers angegeben werden.

Die erste Aufgabe wird erfindungsgemäß dadurch gelöst, dass bei einem Rotationskörper der eingangs genannten Art mindestens ein Teil einer Oberfläche des Außenteiles Rippen aufweist, die einen strömungsmechanischen Reibungswiderstand der Oberfläche reduzieren, wobei die Rippen im Wesentlichen regelmäßig entlang einer Umfangsrichtung des Rotationskörpers angeordnet sind.

Ein mit der Erfindung erzielter Vorteil ist darin zu sehen, dass mit einem derart ausgebildeten Rotationskörper auch der Reibungswiderstand bei einer rotierenden Bewegung reduziert werden kann. Überraschenderweise hat sich gezeigt, dass eine Strukturierung der Oberfläche mit einem sich in Umfangsrichtung regelmäßig wiederholenden Muster, insbesondere einem aus Rippen bestehenden Muster, zu einer Verbesserung des Reibungswiderstandes führt. Dies lässt sich damit erklären, dass ein Fluidteilchen des Mediums bei einer Rotation des Rotationskörpers vom Rotationskörper mitgerissen wird und über zumindest einen Teil der Rotation eine Bewegung entlang der Umfangsrichtung des Rotationskörpers ausführt. Dabei kann das Muster aus Rippen bestehen, die in einem Winkel zur Umfangsrichtung angeordnet sind und gerade oder gekrümmt radial nach außen stehen. Es kann aber auch vorgesehen sein, dass die Rippen genau in Umfangsrichtung verlaufen und damit eine durchgängige Rippe in Umfangsrichtung vorhanden ist. In diesem Fall sind bevorzugt mehrere Rippen radial zueinander versetzt und koaxial zur Rotationsachse angeordnet, um einen reibungsreduzierenden Effekt zu erzielen. Alternativ ist auch die Anordnung einer einzigen Rippe mit einem sehr kleinen Winkel relativ zur Umfangsrichtung möglich, die dann spiralförmig über die Oberfläche verläuft. Bei Aufbringung der Rippen auf eine zylindrische Außenkontur eines Rotationskörpers kann vorgesehen sein, dass die Rippen im einfachsten Fall in Umfangsrichtung verlaufen und über eine axiale Erstreckung der zylindrischen Oberfläche in axialer Richtung äquidistant zueinander beabstandet sind. Es kann allerdings auch vorgesehen sein, dass sich eine Rippengeometrie oder ein Abstand der Rippen voneinander über die axiale und/oder radiale Erstreckung ändert, um gegebenenfalls unterschiedlichen Strömungsverhältnissen an verschiedenen Positionen der Oberfläche Rechnung zu tragen. Auch bei einer derartigen Anwendung sollten die Rippen in Umfangsrichtung regelmäßig ausgebildet sein. Insbesondere sollte sich eine aufgrund der Rippen ergebende Struktur in einem Bereich der Oberfläche entlang der Umfangsrichtung regelmäßig wiederholen oder entlang der Umfangsrichtung konstant bleiben. Mit einer derartig ausgebildeten Oberfläche lässt sich eine Verringerung des Reibungswiderstandes an allen Rotationskörpern erzielen; dabei ist eine Anwendung an schnelldrehenden rotierenden Maschinen der Energieerzeugung, insbesondere Rotoren von Generatoren oder Turbinen, genauso möglich, wie die Anwendung an rotierenden Bauteilen eines Fahrzeuges, insbesondere Rädern oder Felgen, um Energieeinsparungen zu erreichen.

Vorteilhaft ist es, dass die Rippen eine Krümmung aufweisen. Dies hat sich als besonders günstig erwiesen, um den gewünschten Effekt zu erzielen.

Es hat sich bewährt, dass die Rippen etwa konzentrisch zur Rotationsachse ausgerichtet sind. Diese Sonderform der Ausbildung, bei welcher die Rippen immer etwa in Umfangsrichtung verlaufen, hat sich als besonders zielführend erwiesen, um den reibungsverringernden Effekt zu erzielen. Dies ergibt sich aus der teilweise in Umfangsrichtung gerichteten Strömung, die aus dem Mitreißen von Fluidpartikeln resultiert.

Es kann bevorzugt vorgesehen sein, dass die Rippen etwa eine Keilform aufweisen. Wie bei kontinuierlich überströmten Flächen hat sich auch bei rotierenden Bauteilen die Keilform als zweckmäßig erwiesen, um den Reibungswiderstand zu reduzieren.

Um die Strömung besonders günstig zu beeinflussen, ist es vorteilhaft, dass die Rippen einen Keilwinkel von 20° bis 30° aufweisen. Weiter kann damit auch ein Verschleiß der Oberfläche minimiert werden.

Es ist von Vorteil, dass ein Verhältnis einer Rippenhöhe zu einem Rippenabstand etwa 0,25 bis 0,75 beträgt. Mit einem derartigen Verhältnis können bei sehr vielen Fluiden, insbesondere auch bei Luft, sehr gute Ergebnisse erzielt werden.

Bewährt hat es sich, dass der normierte seitliche Rippenabstand

$$ s+ \ = \ \frac{s\sqrt{\tau_W / \rho}}{\nu} $$

10 bis 20, vorzugsweise 12 bis 18 beträgt, wobei s einem Rippenabstand, $\tau_W$ der mittleren Wandschubspannung, $\rho$ der Dichte des Mediums und $\nu$ der kinematischen Viskosität des Mediums entspricht. Dieser Wertebereich für s+ hat sich aus experimentellen Beobachtungen als besonders vorteilhaft erwiesen. Unter Verwendung dieser Beziehung kann die Oberfläche auch sehr günstig an höhere Geschwindigkeiten in einem weiter von der Rotationsachse entfernten Bereich angepasst werden. Dies kann zur Folge haben, dass Rippen, die weiter von der Rotationsachse entfernt sind, einen größeren Abstand voneinander aufweisen als solche, die nahe an der Rotationsachse liegen. Alternativ kann auch eine mittlere Geschwindigkeit oder eine mittlere Wandschubspannung errechnet werden und ein Rippenprofil bzw. der Parameter s+ an diesen errechneten mittleren Wert angepasst werden.

Zweckmäßigerweise ist vorgesehen, dass ein Rippenabstand etwa 5 μm bis 200 μm, bevorzugt etwa 80 μm bis 120 μm, beträgt. Dieser Rippenabstand hat sich in experimentellen Versuchen bei Verwendung eines Rotationskörpers in vielen Medien, insbesondere Luft, als besonders günstig erwiesen. Besonders bevorzugt ist ein Rippenabstand von etwa 100 μm.

Es ist vorteilhaft, dass eine Rippenhöhe etwa 5 μm bis 150 μm, bevorzugt etwa 40 μm bis 60 μm, beträgt. Mit einer derartigen Rippenhöhe lassen sich Anwendungen bei vielen Geschwindigkeiten sowie verschiedenen Medien sehr gut abdecken und über eine Fertigungsstandardisierung Einsparungen erzielen. Um besonders günstige Ergebnisse zu erzielen, hat sich eine Rippenhöhe von etwa 50 μm bewährt.

Es kann auch vorgesehen sein, dass ein Spitzenradius der Rippen etwa 0,05 μm bis 0,15 μm beträgt. Dies hat sich sowohl fertigungstechnisch als auch strömungsmechanisch als zweckmäßig erwiesen.

Bevorzugt kann vorgesehen sein, dass ein Talradius der Rippen etwa 1 μm bis 2 μm beträgt. Insbesondere bei reibungsreduzierenden Oberflächen von Rotationskörpern hat sich dies als besonders vorteilhaft herausgestellt.

Es hat sich bewährt, dass die Rippen durch eine im Wesentlichen ebene Fläche beabstandet sind. Dadurch werden strömungsmechanische Vorteile erzielt und Vereinfachungen im Fertigungsprozess erreicht. Selbstverständlich ist dabei nicht ausgeschlossen, dass die reibungsreduzierende Oberfläche beispielsweise auf eine kegelförmige oder zylindrische Oberfläche aufgebracht wird. Dies kann eine Oberfläche einer rotierenden Maschine oder eines Bauteiles einer rotierenden Maschine, insbesondere eines Rotors eines Generators, sein. Für einen derartigen Anwendungsfall ist der Bereich zwischen den Rippen selbstredend auch mit einer Krümmung entsprechend der kegelförmigen oder zylindrischen Oberfläche des Bauteiles ausgebildet. Damit lässt sich die Oberfläche auf dem Rotationskörper besonders günstig und einfach herstellen.

Vorteilhaft ist es, dass eine Lagerstelle vorgesehen ist und eine Verbindung zwischen Außenteil und Lagerstelle über mehrere, insbesondere drei bis sieben, bevorzugt fünf Speichen hergestellt ist. Dies hat sich als vorteilhaft erwiesen, um Material sowie Kosten zu sparen und einen Widerstand des Rotationskörpers gegenüber einer gegebenenfalls vorhandenen Strömung mit Strömungsanteilen in Richtung der Rotationsachse zu minimieren. Dies kann beispielsweise bei Anwendung des erfindungsgemäßen Rotationskörpers als Fahrradfelge bei Seitenwinden auftreten. Dabei kann die Verbindung unmittelbar oder mittelbar, beispielsweise unter Verwendung eines Zwischenstückes, ausgebildet sein. Bezüglich eines optimalen Lenkmomentes hat sich der Einsatz von Speichen und Hohlräumen zwischen den Speichen als besonders günstig erwiesen.

Bevorzugt ist vorgesehen, dass der Rotationskörper zumindest teilweise aus einem Faserverbundwerkstoff, insbesondere einem Kohlefaserverbundwerkstoff hergestellt ist. Damit kann der Körper besonders leicht ausgebildet werden, um weitere Energieeinsparungen beispielsweise bei Beschleunigungsvorgängen zu erzielen. Selbstverständlich ist auch eine Fertigung aus einem anderen Material, insbesondere einem Leichtmetall oder einer Kombination verschiedener Materialien, genauso möglich.

Es ist von Vorteil, dass die Rippen an einer Oberfläche angeordnet sind, deren radialer Abstand zur Rotationsachse mindestens 70 % des maximalen Abstandes des Rotationskörpers zur Rotationsachse beträgt. Dies hat sich als besonders günstig erwiesen, da eine Geschwindigkeit einer rotierenden Oberfläche mit radialem Abstand zur Rotationsachse zunimmt und der Reibungswiderstand geschwindigkeitsabhängig ist.

Es hat sich bewährt, dass die Rippen an einer Seitenfläche des Rotationskörpers angeordnet sind. Dies ist unter anderem deshalb von Vorteil, da vor allem bei schmalen Rädern oder Felgen, insbesondere Rädern oder Felgen von Fahrrädern, der an den Seitenflächen entstehende Reibungswiderstand wesentlich größer ist als jener, der an den Stirnflächen der Räder entsteht.

Die zweite Aufgabe wird erfindungsgemäß dadurch gelöst, dass die mindestens eine Oberfläche mit einem unter elektromagnetischer Strahlung, insbesondere UV-Licht, zumindest teilweise aushärtenden Lack bedeckt wird und auf den Lack eine Form, die eine Negativform der Rippen aufweist, aufgebracht wird und der Lack nach Aufbringen der Form mittels elektromagnetischer Strahlung, insbesondere UV-Licht, ausgehärtet wird.

Dadurch kann die Fertigung eines Rotationskörpers mit reibungsreduzierender Oberfläche besonders günstig erfolgen. Bevorzugt weist dabei die Form eine im Wesentlichen rotationssymmetrische Struktur auf.

Zweckmäßigerweise ist vorgesehen, dass als Form eine Siliconfolie aufgebracht und der Lack durch die Folie hindurch ausgehärtet wird. Damit lassen sich Fertigungskosten weiter reduzieren.

Alternativ kann die Fertigung auch mittels einer oder mehreren mit entsprechenden Rippen strukturierten Folien durchgeführt werden, wobei die Folien auf die Oberfläche des Rotationskörpers aufgeklebt werden, um an der Oberfläche den reibungsreduzierenden Effekt zu erzielen.

Die dritte Aufgabe wird dadurch gelöst, dass ein erfindungsgemäßer Rotationskörper als Rad oder Teil eines Rades eines Fahrzeuges, insbesondere eines Fahrrades verwendet wird.

Besonders bei Fahrrädern lassen sich derartige Rotationskörper besonders vorteilhaft einsetzen, da der Reibungswiderstand, insbesondere ein Luftreibungswiderstand, der bestimmende Faktor vor allem bei hohen Geschwindigkeiten im Radsport ist. Bei Verwendung einer Fahrradfelge mit einer erfindungsgemäßen Oberfläche an einem Felgenhorn, insbesondere einer Oberfläche mit konzentrisch angeordneten Rippen, bestehend z. B. aus einem Kohlefaserverbundwerkstoff lassen sich Leistungseinsparungen von bis zu einem Watt bei Geschwindigkeiten von etwa 45 km/h, verglichen mit Fahrradfelgen des Standes der Technik, erzielen. Bezogen auf den Luftreibungswiderstand am Felgenhorn bedeutet dies eine Reduktion um etwa 8 %.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:

Fig. 1 einen erfindungsgemäßen Rotationskörper in einer Seitenansicht in Richtung einer Rotationsachse;

Fig. 2 eine Schnittdarstellung eines erfindungsgemäßen Rotationskörpers entlang der Linie II-II in Fig. 1;

Fig. 3 ein Detail III der Schnittdarstellung in Fig. 2, wobei reibungsreduzierende Rippen schematisch dargestellt sind.

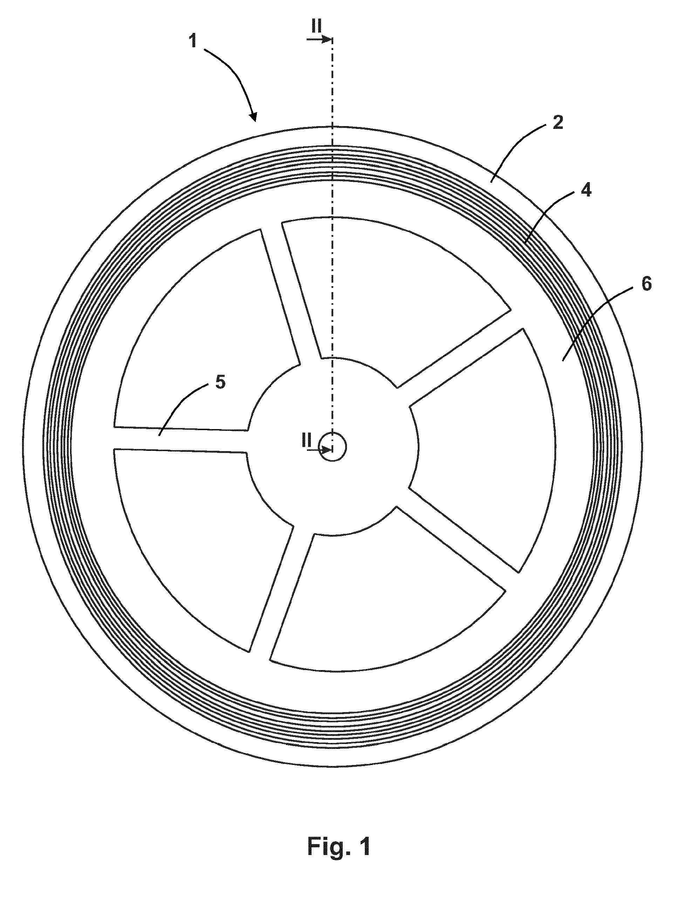

Fig. 1 zeigt eine Darstellung eines erfindungsgemäßen Rotationskörpers 1, der als Fahrradfelge ausgeführt ist. Exemplarisch sind einige umlaufende reibungsreduzierende Rippen 4 schematisch dargestellt, die an einer Oberfläche eines Außenteiles 2 des Rotationskörpers 1 angeordnet sind. Aufgrund eines Rippenabstandes s von etwa 100 $\mu$m können bei einer derartigen Fahrradfelge mehrere hundert Rippen 4 an der Oberfläche des Außenteiles 2 angeordnet sein. Dabei beträgt eine Rippenhöhe h etwa 50 $\mu$m, wobei sowohl Rippenhöhe h als auch Rippenabstand s an die jeweiligen Einsatzbedingungen, insbesondere Dichte und Viskosität eines umströmenden Mediums sowie erwartete Strömungsgeschwindigkeiten, über die Wahl eines Wertes für den normierten seitlichen Rippenabstand s+ von etwa 10 bis 20 angepasst werden können. Die strömungsreduzierenden Rippen 4 verlaufen im Ausführungsbeispiel genau in Umfangsrichtung, durchgängig und in konzentrischen Kreisen zu einer Rotationsachse 3. Dies stellt eine besonders vorteilhafte Variante der Anordnung von reibungsreduzierenden Rippen 4 dar, allerdings haben sich auch Ausführungsvarianten mit in Umfangsrichtung regelmäßigen Rippen 4 als vorteilhaft erwiesen, die einen Winkel mit der Umfangsrichtung einschließen, der von Null verschieden ist. Im dargestellten Ausführungsbeispiel werden fünf Speichen 5 verwendet, welche den Außenteil 2 mit einer Lagerstelle verbinden, an welcher der Rotationskörper 1 um die Rotationsachse 3 drehbar lagerbar oder gelagert ist. Besonders vorteilhaft ist es, die Rippen 4 mit großem radialen Abstand zur Drehachse zu positionieren, da ein reibungsreduzierender Effekt bei hohen Geschwindigkeiten einen höheren Leistungsgewinn ermöglicht und die Geschwindigkeit des Rotationskörpers 1 mit steigendem Abstand zur Rotationsachse 3 zunimmt. Eine Strukturierung einer Oberfläche der radial weiter innen liegenden Speichen 5 würde also auch einen erfindungsgemäßen Effekt erzielen, allerdings wäre dieser aufgrund der geringeren Geschwindigkeiten der Speichen 5 wesentlich weniger stark ausgeprägt. Die Rippen 4 sind beim dargestellten, als Fahrradfelge ausgeführten, Rotationskörper 1 aus Symmetriegründen an beiden Seitenflächen des Außenteiles 2 angeordnet, wobei auch eine Anordnung an nur einer Seitenfläche 6 bereits Vorteile hinsichtlich eines Luftreibungswiderstandes bringen würde. Es kann auch zweckmäßig sein, die reibungsreduzierenden Rippen 4 bei einer Ausführung des erfindungsgemäßen Rotationskörpers 1 als rotierende Maschine, beispielsweise als Rotor eines elektrischen Generators, an einer äußeren, gegebenenfalls zylindrischen, Oberfläche des Rotationskörpers 1 anzuordnen, um den erfindungsgemäßen Effekt zu erzielen. Dabei können sich relevante Parameter der Rippen 4 wie Rippenhöhe h, Rippenabstand s sowie Verhältnis von Rippenhöhe h zu Rippenabstand s über eine axiale Erstreckung des Rotationskörpers 1 ändern, um lokalen Strömungsverhältnissen entlang der axialen Erstreckung Rechnung zu tragen. Auch bei derartigen, an einer zylindrischen oder auch kegeligen Oberfläche verlaufenden, Rippen 4 hat sich eine Ausrichtung der Rippen 4 entlang der Umfangsrichtung, konzentrisch zu einer Rotationsachse 3, als besonders vorteilhaft erwiesen, wobei hier Rippen 4 mit einem Winkel relativ zur Rotationsachse 3 bereits einen ähnlichen Effekt erreichen können.

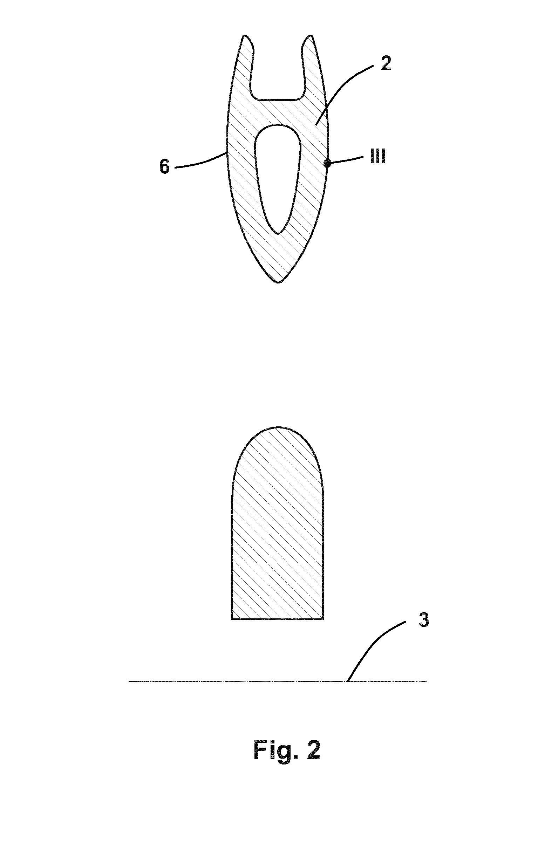

Fig. 2 zeigt einen Schnitt durch einen als Fahrradfelge ausgeführten erfindungsgemäßen Rotationskörper 1 gemäß Fig. 1. Aufgrund der schmalen Ausbildung des Außenteiles 2 ist es in diesem Fall zweckmäßig, nahezu die gesamte Seitenfläche 6 des Außenteiles 2 mit reibungsreduzierenden Rippen 4 zu versehen. Ausgenommen von der reibungsreduzierenden Strukturierung der Oberfläche mit Rippen 4 sind jene Oberflächen des Rotationskörpers 1, an denen bei Fahrradfelgen der Fahrradreifen mit der Fahrradfelge verbunden ist, weshalb an diesen Oberflächen keine Luftreibung auftritt. Es ist allerdings auch möglich, nur einen Teil der Oberfläche mit Rippen 4 zu versehen, um Fertigungskosten zu optimieren. Der Außenteil 2 ist in diesem Ausführungsbeispiel vollkommen rotationssymmetrisch ausgeführt, es kann allerdings auch vorgesehen sein, dass dieser beispielsweise zum Zwecke der Gewichtseinsparung oder der Kühlung von Bohrungen durchsetzt ist.

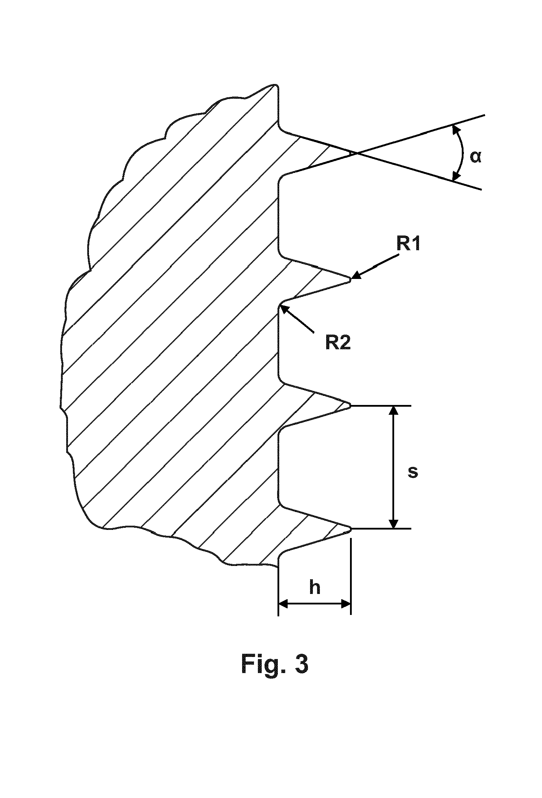

Fig. 3 zeigt ein Detail der Oberfläche des erfindungsgemäßen Rotationskörpers 1, wobei die Rippen 4 dargestellt sind. Neben Rippenabstand s sowie Rippenhöhe h und der Lage der Rippen 4 relativ zu einer Strömungsrichtung beeinflussen auch ein Keilwinkel α, ein Talradius R2 und ein Spitzenradius R1 die Ausprägung des reibungsreduzierenden Effektes. Beim erfindungsgemäßen, als Fahrradfelge ausgeführten Rotationskörper 1 beträgt dabei der Keilwinkel α etwa 25°, wobei sich Winkel zwischen 15° und 40° als günstig herausgestellt haben. Der Spitzenradius R1 beträgt im Ausführungsbeispiel etwa 0,1 μm, wobei der Spitzenradius R1 bis zu 0,5 μm betragen kann. Der Talradius R2 ist im dargestellten Ausführungsbeispiel mit etwa 1,5 μm ausgeführt, wobei sich für diesen Parameter ein Bereich von 0,5 μm bis 5 μm als vorteilhaft erwiesen hat.

Um einen derartigen Rotationskörper 1 herzustellen, wird an einer im radial äußeren Bereich eines Rotationskörpers 1 liegenden Seitenfläche 6 ein Lack appliziert, welcher unter elektromagnetischer Strahlung, insbesondere UV-Licht, aushärtet, und auf diesen Lack eine Negativform der herzustellenden Rippenkontur aufgebracht wird, wobei diese Negativform bevorzugt aus Silicon hergestellt wird. Anschließend wird der Lack mittels elektromagnetischer Strahlung, insbesondere UV-Licht, ausgehärtet, sodass die Lackoberfläche die Rippenkontur der Negativform annimmt. Bei Verwendung einer Siliconfolie kann die Aushärtung durch die Siliconfolie hindurch durchgeführt werden.

Alternativ ist auch die Herstellung von Folien mit in den Folien integrierten Rippen 4 möglich, wobei dann die Folien mit integrierten Rippen 4 auf den Rotationskörper 1 aufgeklebt werden, wie dies bei Anwendungen im Flugzeugbau bereits für linear überströmte Oberflächen bekannt ist.

**Patentansprüche**

1. Rotationskörper (1), insbesondere Fahrradfelge, aufweisend einen im Wesentlichen runden Außenteil (2) mit mindestens einer Oberfläche, wobei der Rotationskörper (1) um eine Rotationsachse (3) drehbar lagerbar und bei einer Rotation um die Rotationsachse (3) zumindest teilweise von einer turbulenten Strömung eines Mediums überströmbar ist, **dadurch gekennzeichnet, dass** mindestens ein Teil einer Oberfläche des Außenteiles (2) Rippen (4) aufweist, die einen strömungsmechanischen Reibungswiderstand der Oberfläche reduzieren, wobei die Rippen (4) im Wesentlichen regelmäßig entlang einer Umfangsrichtung des Rotationskörpers (1) angeordnet sind.

2. Rotationskörper (1) nach Anspruch 1, **dadurch gekennzeichnet, dass** die Rippen (4) eine Krümmung aufweisen.

3. Rotationskörper (1) nach Anspruch 1 oder 2, **dadurch gekennzeichnet, dass** die Rippen (4) etwa konzentrisch zur Rotationsachse (3) ausgerichtet sind.

4. Rotationskörper (1) nach einem der Ansprüche 1 bis 3, **dadurch gekennzeichnet, dass** die Rippen (4) etwa eine Keilform aufweisen.

5. Rotationskörper (1) nach einem der Ansprüche 1 bis 4, **dadurch gekennzeichnet, dass** die Rippen (4) einen Keilwinkel ($\alpha$) von 20° bis 30° aufweisen.

6. Rotationskörper (1) nach einem der Ansprüche 1 bis 5, **dadurch gekennzeichnet, dass** ein Verhältnis einer Rippenhöhe (h) zu einem Rippenabstand (s) etwa 0,25 bis 0,75 beträgt.

7. Rotationskörper (1) nach einem der Ansprüche 1 bis 6, **dadurch gekennzeichnet, dass** der normierte seitliche Rippenabstand

$$s+ = \frac{s\sqrt{\tau_W / \rho}}{\nu}$$

10 bis 20, vorzugsweise 12 bis 18 beträgt, wobei s einem Rippenabstand (s), $\tau_W$ der mittleren Wandschubspannung, $\rho$ der Dichte des Mediums und $\nu$ der kinematischen Viskosität des Mediums entspricht.

8. Rotationskörper (1) nach einem der Ansprüche 1 bis 7, **dadurch gekennzeichnet, dass** ein Rippenabstand (s) etwa 5 $\mu$m bis 200 $\mu$m, bevorzugt etwa 80 $\mu$m bis 120 $\mu$m, beträgt.

9. Rotationskörper (1) nach einem der Ansprüche 1 bis 8, **dadurch gekennzeichnet, dass** eine Rippenhöhe (h) etwa 5 $\mu$m bis 150 $\mu$m, bevorzugt etwa 40 $\mu$m bis 60 $\mu$m, beträgt.

10. Rotationskörper (1) nach einem der Ansprüche 1 bis 9, **dadurch gekennzeichnet, dass** ein Spitzenradius (R1) der Rippen (4) etwa 0,05 $\mu$m bis 0,15 $\mu$m beträgt.

11. Rotationskörper (1) nach einem der Ansprüche 1 bis 10, **dadurch gekennzeichnet, dass** ein Talradius (R2) der Rippen (4) etwa 1 $\mu$m bis 2 $\mu$m beträgt.

12. Rotationskörper (1) nach einem der Ansprüche 1 bis 11, **dadurch gekennzeichnet, dass** die Rippen (4) durch eine im Wesentlichen ebene Fläche beabstandet sind.

13. Rotationskörper (1) nach einem der Ansprüche 1 bis 12, **dadurch gekennzeichnet, dass** eine Lagerstelle vorgesehen ist und eine Verbindung zwischen Außenteil (2) und Lagerstelle über mehrere, insbesondere drei bis sieben, bevorzugt fünf Speichen (5) hergestellt ist.

14. Rotationskörper (1) nach einem der Ansprüche 1 bis 13, **dadurch gekennzeichnet, dass** der Rotationskörper (1) zumindest teilweise aus einem Faserverbundwerkstoff, insbesondere einem Kohlefaserverbundwerkstoff hergestellt ist.

15. Rotationskörper (1) nach einem der Ansprüche 1 bis 14, **dadurch gekennzeichnet, dass** die Rippen (4) an einer Oberfläche angeordnet sind, deren radialer Abstand zur Rotationsachse (3) mindestens 70 % des maximalen Abstandes des Rotationskörpers (1) zur Rotationsachse (3) beträgt.

16. Rotationskörper (1) nach einem der Ansprüche 1 bis 15, **dadurch gekennzeichnet, dass** die Rippen (4) an einer Seitenfläche (6) des Rotationskörpers (1) angeordnet sind.

17. Verfahren zum Herstellen eines Rotationskörpers (1) nach einem der Ansprüche 1 bis 16, **dadurch gekennzeichnet, dass** die mindestens eine Oberfläche mit einem unter elektromagnetischer Strahlung, insbesondere UV-Licht, zumindest teilweise aushärtenden Lack bedeckt wird und auf den Lack eine Form, die eine Negativform der Rippen (4) aufweist, aufgebracht wird und der Lack nach Aufbringen der Form mittels elektromagnetischer Strahlung, insbesondere UV-Licht, ausgehärtet wird.

18. Verfahren nach Anspruch 17, **dadurch gekennzeichnet, dass** als Form eine Siliconfolie aufgebracht und der Lack durch die Folie hindurch ausgehärtet wird.

19. Verwendung eines Rotationskörpers (1) nach einem der Ansprüche 1 bis 16 als Rad oder Teil eines Rades eines Fahrzeuges, insbesondere eines Fahrrades.

**Fig. 1**

**Fig. 2**

Fig. 3

Europäisches Patentamt
European Patent Office
Office européen des brevets

## EUROPÄISCHER RECHERCHENBERICHT

Nummer der Anmeldung

EP 13 15 9133

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 629 779 A1 (KLEIN SCHANZLIN & BECKER AG [DE]) 21. Dezember 1994 (1994-12-21) | 1-4,15, 16 | INV. F15D1/12 |
| Y | * Seite 2, Zeile 1 - Zeile 56 * * Seite 3, Zeile 15 - Zeile 53; Ansprüche 1-9; Abbildungen 1,2 * * Seite 4, Zeile 1 - Zeile 7; Abbildungen 6,7 * | 5-12,14, 17,18 | B60B21/02 B60B5/02 |
| | ----- | | |
| Y,D | DE 196 50 439 C1 (DEUTSCH ZENTR LUFT & RAUMFAHRT [DE]) 12. März 1998 (1998-03-12) | 5-12 | |
| A | * Spalte 2, Zeile 17 - Spalte 3, Zeile 3 * * Spalte 3, Zeile 22 - Spalte 4, Zeile 64; Abbildungen 1-5 * | 4 | |
| | ----- | | |
| Y | WO 89/11343 A2 (BMT FLUID MECHANICS LIMITED [GB]) 30. November 1989 (1989-11-30) | 14,17,18 | |
| A | * Seite 2, Zeile 3 - Zeile 16 * * Seite 7, Zeile 7 - Zeile 27 * * Seite 11, Zeile 14 - Zeile 27; Abbildungen 1-9 * | 1 | |
| | ----- | | **RECHERCHIERTE SACHGEBIETE (IPC)** |
| X | FR 2 947 313 A1 (INST FRANCAIS DU PETROLE [FR]) 31. Dezember 2010 (2010-12-31) | 1-4,16 | F15D B60B |
| Y | * Seite 4, Zeile 1 - Seite 12, Zeile 3; Abbildungen 1,2,14 * | 5-12,17, 18 | B64C B62D F04D |
| | ----- | | F01D |
| Y | EP 2 261 117 A2 (LEITL PETER ADRIAN [AT]) 15. Dezember 2010 (2010-12-15) | 5-12,17, 18 | |
| A | * Absatz [0026] - Absatz [0027]; Abbildung 1 * | 1 | |
| | ----- | | |
| X | US 4 284 302 A (DREWS HILBERT F P) 18. August 1981 (1981-08-18) | 1-5,16 | |
| A | * Spalte 5, Zeile 13 - Spalte 6, Zeile 49; Abbildungen 5,6,7 * | 15 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 28. Juni 2013 | Roberts, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 13 15 9133

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2007 137340 A (TOYOTA MOTOR CORP) 7. Juni 2007 (2007-06-07) * Zusammenfassung; Abbildung 6 * | 1,13,15, 16 | |
| X | US 2007/018055 A1 (SCHMIDT ERIC T [US]) 25. Januar 2007 (2007-01-25) * Absatz [0007] - Absatz [0019]; Abbildung 14 * | 1,2,16, 19 | |
| X | US 2004/135424 A1 (ORDING ANDREW [US] ET AL) 15. Juli 2004 (2004-07-15) * Absatz [0002] - Absatz [0016] * * Absatz [0047]; Abbildungen 10,11 * | 1,14,16, 19 | |
| X | US 2011/248552 A1 (KOSHIYAMA KAZUKI [JP] ET AL) 13. Oktober 2011 (2011-10-13) * Absatz [0004] - Absatz [0008] * * Absatz [0034] - Absatz [0056]; Abbildungen 1-15 * | 1,13,19 | |
| X | WO 2004/103732 A1 (XENTIS COMPOSITE PRODUKTIONS & [AT]; POSSARNIG GERALD [AT]; HERMANN MA) 2. Dezember 2004 (2004-12-02) * Seite 1, Zeile 1 - Seite 10, Zeile 19; Anspruch 14; Abbildungen 1,2 * | 1-3, 14-16,19 | RECHERCHIERTE SACHGEBIETE (IPC) |
| X | DE 10 2009 038459 B3 (CARBOFIBRETEC GMBH [DE]) 17. März 2011 (2011-03-17) * Absatz [0014] - Absatz [0047]; Ansprüche 1,2,3,4,6,8,9; Abbildungen 1,2,3a,3b * | 1-3, 14-16,19 | |
| X | EP 1 018 443 A2 (JAANLUEN INDUSTRY CO LTD [TW]) 12. Juli 2000 (2000-07-12) * Absatz [0001] - Absatz [0007]; Ansprüche 1-3; Abbildungen 1-6 * | 1-3,13, 15,16,19 | |

-/--

Der vorliegende Recherchenbericht wurde für alle Patentansprüche erstellt

| Recherchenort | Abschlußdatum der Recherche | Prüfer |
|---|---|---|
| München | 28. Juni 2013 | Roberts, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 .................................................................................
& : Mitglied der gleichen Patentfamilie, übereinstimmendes Dokument

EPO FORM 1503 03.82 (P04C03)

Europäisches Patentamt
European Patent Office
Office européen des brevets

## EUROPÄISCHER RECHERCHENBERICHT

**Nummer der Anmeldung**

EP 13 15 9133

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2011/133557 A1 (SMART SIMON [GB]; NELSON KEVIN [US]) 27. Oktober 2011 (2011-10-27) * Seite 13, Zeile 20 - Seite 14, Zeile 31; Abbildungen 23,24a,24,b * | 1,13-16 | |
| A | US 5 061 013 A (HED STEVEN A [US] ET AL) 29. Oktober 1991 (1991-10-29) * Spalte 1, Zeile 63 - Spalte 2, Zeile 37 * * Spalte 4, Zeile 5 - Spalte 5, Zeile 21; Abbildungen 1-3,5,7 * | 1,13-16, 19 | |
| A | WO 2005/030472 A1 (FRAUNHOFER GES FORSCHUNG [DE]; STENZEL VOLKMAR [DE]; KAUNE MARTIN [DE]) 7. April 2005 (2005-04-07) * Seite 18, Zeile 1 - Seite 21, Zeile 23; Ansprüche 1-15 * | 1,17,18 | |
| X,P | FR 2 966 889 A1 (IFP ENERGIES NOUVELLES [FR]) 4. Mai 2012 (2012-05-04) * das ganze Dokument * | 1-9,12, 16,17 | RECHERCHIERTE SACHGEBIETE (IPC) |
| X,P | DE 10 2011 114664 A1 (DAIMLER AG [DE]) 26. April 2012 (2012-04-26) * Absatz [0010] - Absatz [0018]; Abbildungen 1-5 * * Absatz [0029] - Absatz [0031]; Ansprüche 1,7 * | 1,13,15, 16,19 | |

Der vorliegende Recherchenbericht wurde für alle Patentansprüche erstellt

| Recherchenort | Abschlußdatum der Recherche | Prüfer |
|---|---|---|
| München | 28. Juni 2013 | Roberts, Davide |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 9133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2013

| Im Recherchenbericht angeführtes Patentdokument | | Datum der Veröffentlichung | Mitglied(er) der Patentfamilie | | Datum der Veröffentlichung |
|---|---|---|---|---|---|
| EP 0629779 | A1 | 21-12-1994 | DE | 4319628 A1 | 22-12-1994 |
| | | | EP | 0629779 A1 | 21-12-1994 |
| | | | JP | 3455586 B2 | 14-10-2003 |
| | | | JP | H07139488 A | 30-05-1995 |
| | | | US | 5846055 A | 08-12-1998 |
| DE 19650439 | C1 | 12-03-1998 | DE | 19650439 C1 | 12-03-1998 |
| | | | EP | 0846617 A2 | 10-06-1998 |
| | | | US | 5971326 A | 26-10-1999 |
| WO 8911343 | A2 | 30-11-1989 | AU | 3732789 A | 12-12-1989 |
| | | | EP | 0383852 A1 | 29-08-1990 |
| | | | JP | H03500508 A | 07-02-1991 |
| | | | WO | 8911343 A2 | 30-11-1989 |
| FR 2947313 | A1 | 31-12-2010 | KEINE | | |
| EP 2261117 | A2 | 15-12-2010 | AT | 508274 A1 | 15-12-2010 |
| | | | EP | 2261117 A2 | 15-12-2010 |
| US 4284302 | A | 18-08-1981 | KEINE | | |
| JP 2007137340 | A | 07-06-2007 | KEINE | | |
| US 2007018055 | A1 | 25-01-2007 | US | 8315847 B1 | 20-11-2012 |
| | | | US | 2007018055 A1 | 25-01-2007 |
| US 2004135424 | A1 | 15-07-2004 | AT | 496781 T | 15-02-2011 |
| | | | AU | 2003275454 A1 | 04-05-2004 |
| | | | CA | 2499893 A1 | 22-04-2004 |
| | | | EP | 1545906 A2 | 29-06-2005 |
| | | | JP | 2006517161 A | 20-07-2006 |
| | | | US | 2004135424 A1 | 15-07-2004 |
| | | | WO | 2004033231 A2 | 22-04-2004 |
| US 2011248552 | A1 | 13-10-2011 | EP | 2374634 A1 | 12-10-2011 |
| | | | US | 2011248552 A1 | 13-10-2011 |
| WO 2004103732 | A1 | 02-12-2004 | AT | 412546 B | 25-04-2005 |
| | | | AT | 415290 T | 15-12-2008 |
| | | | EP | 1625028 A1 | 15-02-2006 |
| | | | ES | 2318290 T3 | 01-05-2009 |
| | | | JP | 2007502239 A | 08-02-2007 |
| | | | US | 2006267397 A1 | 30-11-2006 |
| | | | WO | 2004103732 A1 | 02-12-2004 |

EPO FORM P0461

Für nähere Einzelheiten zu diesem Anhang : siehe Amtsblatt des Europäischen Patentamts, Nr.12/82

EP 2 639 462 A1

**ANHANG ZUM EUROPÄISCHEN RECHERCHENBERICHT**
**ÜBER DIE EUROPÄISCHE PATENTANMELDUNG NR.**

EP 13 15 9133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2013

| Im Recherchenbericht angeführtes Patentdokument | Datum der Veröffentlichung | Mitglied(er) der Patentfamilie | Datum der Veröffentlichung |
|---|---|---|---|
| DE 102009038459 B3 | 17-03-2011 | KEINE | |
| EP 1018443 A2 | 12-07-2000 | AT 281945 T | 15-11-2004 |
| | | AU 722560 B3 | 03-08-2000 |
| | | CA 2293889 A1 | 05-07-2000 |
| | | DE 69921769 D1 | 16-12-2004 |
| | | DE 69921769 T2 | 10-11-2005 |
| | | EP 1018443 A2 | 12-07-2000 |
| | | US 6120105 A | 19-09-2000 |
| WO 2011133557 A1 | 27-10-2011 | EP 2560827 A1 | 27-02-2013 |
| | | US 2013049441 A1 | 28-02-2013 |
| | | WO 2011133557 A1 | 27-10-2011 |
| | | WO 2011133561 A1 | 27-10-2011 |
| US 5061013 A | 29-10-1991 | KEINE | |
| WO 2005030472 A1 | 07-04-2005 | CN 1863665 A | 15-11-2006 |
| | | DE 10346124 A1 | 19-05-2005 |
| | | EP 1667836 A1 | 14-06-2006 |
| | | KR 20060088887 A | 07-08-2006 |
| | | KR 20120104396 A | 20-09-2012 |
| | | US 2007257400 A1 | 08-11-2007 |
| | | WO 2005030472 A1 | 07-04-2005 |
| FR 2966889 A1 | 04-05-2012 | KEINE | |
| DE 102011114664 A1 | 26-04-2012 | KEINE | |

EPO FORM P0461

Für nähere Einzelheiten zu diesem Anhang : siehe Amtsblatt des Europäischen Patentamts, Nr.12/82

14

**EP 2 639 462 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0205289 A1
- DE 19650439 A1